# EUROPEAN PATENT SPECIFICATION

(11) **EP 0 987 615 B1**
(45) Date of publication and mention of the grant of the patent: **14.02.2007**
(21) Application number: 99118330.2
(22) Date of filing: 15.09.1999
(51) Int. Cl.: G05F 1/573

(54) **Power circuit including inrush current limiter, and integrated circuit including the power circuit**
Leistungsschaltung mit Einschaltstrombegrenzung, und integrierte Schaltung mit dieser Leistungsschaltung
Circuit de puissance avec limiteur de courant d'appel, et circuit intégré avec ce circuit de puissance

(30) Priority: 16.09.1998 JP 26104298
(43) Date of publication of application: 22.03.2000
(73) Proprietor: MATSUSHITA ELECTRIC INDUSTRIAL CO., LTD., Kadoma-shi, Osaka 571-8501 (JP)
(72) Inventor: Kinoshita, Masayoshi, Hirakata-shi, Osaka 573-0084 (JP); Sakiyama, Shiro, Kadoma-shi, Osaka 571-0070 (JP); Kajiwara, Jun, Kyoto-shi, Kyoto 612-8485 (JP); Satomi, Katsuji, Osaka-shi, Osaka 535-0003 (JP); Yamamoto, Hiroo, Takatsuki-shi, Osaka 567-0045 (JP); Ootani, Katsuhiro, Kashihara-shi, Nara 634-0063 (JP)
(74) Representative: Grünecker, Kinkeldey, Stockmair & Schwanhäusser Anwaltssozietät

(56) References cited:
- EP-A- 0 735 452
- EP-A- 0 810 504
- DE-C- 3 405 847
- DE-C- 4 242 989
- US-A- 5 619 127
- US-A- 5 666 044

## Description

### BACKGROUND OF THE INVENTION

The present invention generally relates to a power circuit for converting a supply voltage and outputting the voltage converted, and more particularly relates to a technique of limiting an inrush current during the initial operation of the power circuit.

An integrated circuit may include several components operating at a voltage different from a given supply voltage. In such a situation, a power circuit is used to convert the supply voltage into a required voltage and output the voltage converted.

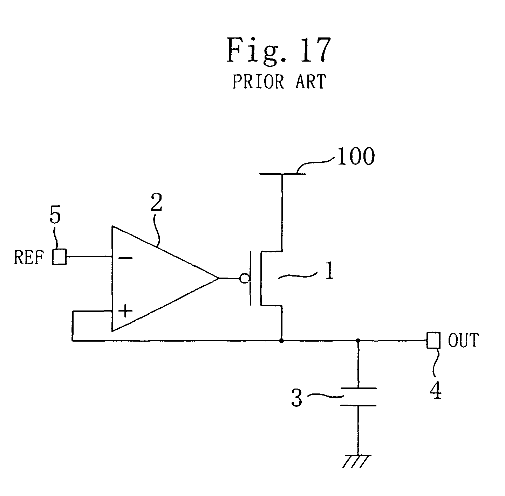

Figure **17** illustrates a configuration of a conventional power circuit. The power circuit shown in Figure **17** includes an output transistor **1**, a differential amplifier **2** and a smoothing capacitor **3**. The output transistor **1** supplies a current to a load connected to an output terminal **4**. The differential amplifier **2** controls the current supplied by the output transistor **1** at such a value as equalizing an output voltage **OUT** output through the output terminal **4** with a reference voltage **REF** applied to a reference terminal **5**. And the smoothing capacitor **3** is provided to remove abrupt fluctuations in the output current of the load.

In the conventional power circuit shown in Figure **17**, however, the output transistor **1** can supply a maximum possible current during the initial operation of the circuit. Thus, an excessively large current, i.e., a so-called "inrush current", might flow from a power supply **100** into the smoothing capacitor **3** via the output transistor **1**. Such an inrush current might adversely affect, or damage, the devices of an LSI including the power circuit or external components.

According to an exemplary technique of suppressing the generation of inrush current, an inrush-current-limiting bipolar transistor is connected in series to an output transistor (see Japanese Laid-Open Publication No. 8-154338, for example). In general, the ratio of the emitter-collector current of a bipolar transistor to the base current thereof is equal to or smaller than the current amplification ratio of the base current. Thus, the proposed circuit allegedly suppresses the generation of the inrush current by limiting the base current of the inrush-current-limiting bipolar transistor.

In such a case, however, a process for fabricating the bipolar transistor is required. Accordingly, if the output transistor and the differential amplifier are implemented as MOS transistors, for example, then the fabrication process of such a circuit gets overly complicated.

Also, the inrush-current-limiting transistor is connected in series to the output transistor **1**. Accordingly, the channel of the inrush-current-limiting transistor should be wide enough to supply a large current as the output current, thus increasing the layout area and the overall cost of the power circuit. In addition, when a large current is output, a voltage drop between the emitter and collector of the inrush-current-limiting transistor is large. Thus, it is impossible to supply an output voltage approximating the supply voltage. To suppress the voltage drop caused by the inrush-current-limiting transistor, the channel width thereof should be increased. However, the layout area of the power circuit further increases in such a case.

A voltage regulator with low power consumption and fast response to sudden changes of the electric load is known from European patent EP 0 810 504. The voltage regulator comprises a serial output element that is controlled by an error amplifier sensing the difference between the output voltage and a reference voltage, thus regulating the output voltage in a dosed loop fashion. The fast response characteristics is achieved by an additional switching stage that rapidly turns off the serial output element upon detecting an out-of-balance situation of the differential error amplifier. In this way, an overshoot of the output voltage in case of a sudden reduction of the output current can be limited.

A voltage regulator with a start-up means is described in German patent DE 42 42 989. This document relates to a voltage regulator with improved isolation of electric disturbances between input and output The voltage regulator comprises a reference network, a differential amplifier, and an output controller. Noise in the unregulated supply voltage is suppressed in the regulated output voltage by operating part of the regulatory circuitry by the regulated output voltage. Whereas this does not cause any problems during regular operation, special care has to be taken during start-up of the system. In particular, this document disdoses a start-up means that supervises the operational state of the reference network and the differential amplifier. Unless the operational state is within certain limits, control signals are generated during the start-up phase that pull the control circuit towards a regular mode of operation.

### SUMMARY OF THE INVENTION

Ain object of the present invention is providing a power circuit that can limit the inrush current during the initial operation thereof by adopting a different configuration than the conventional one.

Another object of the present invention is implementing an inrush-current-limiting power circuit substantially without increasing its layout area.

Still another object of the present invention is fabricating the power circuit only by a CMOS process.

Specifically, a power circuit according to the present invention is adapted to convert a supply voltage and output the voltage converted. The power circuit includes: an output transistor for supplying a current from a power supply to an output terminal; a differential amplifier for controlling the current supplied by the output transistor in such a manner as to regulate a voltage at the output terminal based on a preset reference voltage; and means for limiting an inrush current by gradually increasing the current supplied by the output transistor during an initial operation of the power circuit.

According to the present invention, the current supplied by the output transistor is gradually increased by the inrush-current-limiting means during the initial operation of the power circuit. Thus, it is possible to suppress the generation of the inrush current during the initial operation using a different configuration than the conventional one.

In one embodiment of the present invention, the inrush-current-limiting means preferably includes: a limiting transistor, which has such a source potential as controlling a gate potential of the output transistor and is provided on a current path at an output stage of the differential amplifier; and an operation controller for controlling a gate potential of the limiting transistor.

In such an embodiment, the gate potential of the output transistor is controlled based on the source potential of the limiting transistor, and the gate potential of the limiting transistor is controlled by the operation controller. Thus, during the initial operation of the power circuit, the limiting transistor may be operated as a source follower and the gate potential of the limiting transistor may be controlled by the operation controller at such a value as preventing the output transistor from supplying an excessively large current. In this manner, the generation of the inrush current can be suppressed during the initial operation.

In addition, since the limiting transistor is implementable as an MOS transistor, for example, no bipolar process is needed and an inrush-current-limiting power circuit can be fabricating only by a CMOS process.

Moreover, since the limiting transistor is not connected in series to the output transistor, but is provided on the current path at the output stage of the differential amplifier, the output current does not flow through the limiting transistor. Accordingly, the limiting transistor need not have its channel width increased, and therefore, the generation of the inrush current can be suppressed substantially without increasing the layout area of the power circuit. Furthermore, the output voltage does not decrease due to the voltage drop at the limiting transistor. Thus, even when a large current should be supplied as the output current, an output voltage approximating the supply voltage can be supplied.

In another embodiment of the present invention, the operation controller preferably controls the gate potential of the limiting transistor at such a value as preventing the output transistor from supplying an excessively large current during the initial operation of the power circuit. On the other hand, during a normal operation of the circuit, the operation controller preferably controls the gate potential of the limiting transistor at such a value as turning the limiting transistor ON.

In still another embodiment, the operation controller preferably includes: a capacitor, a potential at one terminal of which is used to control the gate potential of the limiting transistor; capacitor initializing means for setting a voltage of the capacitor at a predetermined voltage before the power circuit starts to operate; and a current source, which is selectively turned ON to gradually charge or discharge the capacitor.

In this particular embodiment, the capacitor initializing means preferably includes a switch, which is selectively turned ON, and a transistor, which is connected to form a diode. The switch and the diode-connected transistor are both connected in series between the terminal of the capacitor and a power supply terminal or a ground terminal.

In an alternate embodiment, the operation controller may include a plurality of the current sources, which are selectively turned ON.

In another alternate embodiment, the operation controller may include a plurality of the capacitors, which are selectively charged or discharged.

In still another embodiment, the operation controller may be supplied with first and second control potentials, which are selected by the operation controller during the initial operation and the normal operation of the power circuit, respectively. And the operation controller may control the gate potential of the limiting transistor in accordance with the control voltage selected.

In still another embodiment, the operation controller may include: a bank of resistors that are connected in series to each other, the bank dividing a potential between both terminals thereof into a plurality of potentials; and means for selecting one of the potentials produced by the bank. The operation controller may control the gate potential of the limiting transistor in accordance with the potential selected by the selecting means.

In still another embodiment, the inrush-current-limiting means preferably includes: a limiting transistor, which is provided between the power supply and the output terminal and connected in series to the output transistor; and an operation controller for controlling a gate potential of the limiting transistor.

In this particular embodiment, the operation controller preferably controls the gate potential of the limiting transistor at such a value as preventing the output transistor from supplying an excessively large current during the initial operation of the power circuit. On the other hand, during a normal operation of the circuit, the operation controller preferably controls the gate potential of the limiting transistor at such a value as turning the limiting transistor ON.

In still another embodiment, the operation controller may include: a capacitor, a potential at one terminal of which is used to control the gate potential of the limiting transistor; capacitor initializing means for setting a voltage of the capacitor at a predetermined voltage before the power circuit starts to operate; and a current source, which is selectively turned ON to gradually charge or discharge the capacitor.

In still another embodiment, the inrush-current-limiting means preferably gradually increases a gate-source voltage of the output transistor from a very small value during the initial operation of the power circuit.

An integrated circuit according to the present invention includes the power circuit of the present invention and operates at a voltage that has been converted and output by the power circuit.

### BRIEF DESCRIPTION OF THE DRAWINGS

Figure **1** is a diagram schematically illustrating a configuration of a power circuit with an inrush current limiter according to a first embodiment of the present invention.
Figures **2(a)** and **2(b)** are graphs illustrating the operational concept of the power circuit shown in Figure **1** by way of variations in gate-source voltage **Vgs** with time and variations in current **Id** supplied by the output transistor with time, respectively.
Figure **3** is a diagram illustrating an exemplary realization of the power circuit shown in Figure **1**.
Figure **4** is a diagram illustrating another exemplary realization of the power circuit shown in Figure **1**.
Figure **5** is a diagram illustrating a first alternative configuration of the inrush current limiter.
Figure **6** is a diagram illustrating a second alternative configuration of the inrush current limiter.
Figure **7** is a diagram illustrating a third alternative configuration of the inrush current limiter.
Figure **8** is a diagram illustrating a fourth alternative configuration of the inrush current limiter.
Figure **9** is a diagram illustrating a fifth alternative configuration of the inrush current limiter.
Figure **10** is a diagram illustrating a sixth alternative configuration of the inrush current limiter.
Figure **11** is a diagram illustrating a modified example of the power circuit shown in Figure **3**, in which the output voltage is divided using resistors and then the voltage divided is fed back to the differential amplifier.
Figure **12** is a diagram illustrating another modified example of the power circuit shown in Figure **3**, in which the output transistor and respective transistors of the differential amplifier are implemented as bipolar transistors.
Figure **13** is a diagram illustrating another modified example of the power circuit shown in Figure **3**, in which the output transistor is implemented as an n-channel transistor.
Figure **14** is a diagram illustrating an exemplary circuit configuration of a power circuit according to a second embodiment of the present invention.
Figure **15** is a diagram illustrating another exemplary circuit configuration of the power circuit according to the second embodiment.
Figure **16** is a diagram illustrating a schematic configuration of an integrated circuit including the power circuit of the present invention.
Figure **17** is a diagram illustrating a configuration of a conventional power circuit not including the inrush current limiter.

### DESCRIPTION OF THE PREFERRED EMBODIMENTS

Hereinafter, preferred embodiments of the present invention will be described with reference to the accompanying drawings.

### EMBODIMENT 1

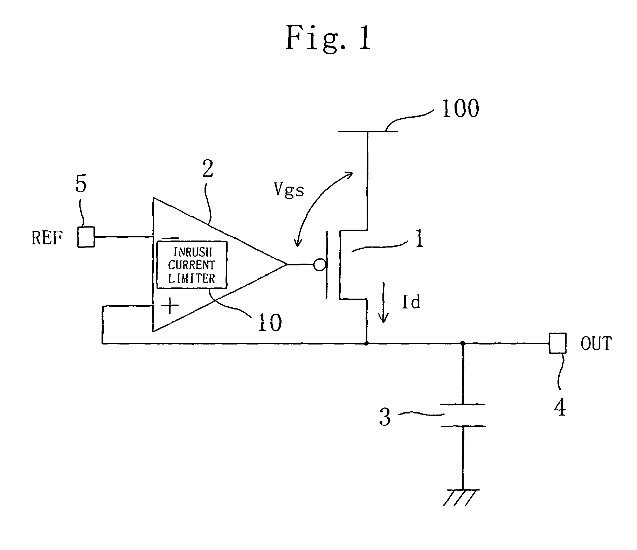

Figure **1** schematically illustrates a configuration of a power circuit with an inrush current limiter according to a first embodiment of the present invention. The power circuit shown in Figure **1** also includes the output transistor **1**, differential amplifier **2** and smoothing capacitor **3**. The output transistor **1** supplies a current from the power supply terminal **100** to the output terminal **4**. The differential amplifier **2** controls the current supplied by the output transistor **1** at such a value as equalizing the output voltage **OUT** at the output terminal **4** with the reference voltage **REF** applied at the reference terminal **5**. The differential amplifier **2** includes an inrush current limiter **10** for gradually increasing the current supplied by the output transistor **1** during the initial operation of the power circuit.

Specifically, the differential amplifier **2** controls the output transistor **1** in a compulsory manner to have the gate-source voltage **Vgs** of the transistor **1** gradually increased from a very small value by the inrush current limiter **10** during the initial operation of the power circuit. On and after the circuit has started to operate normally, the differential amplifier **2** performs its originally intended function of controlling the output transistor **1** in such a manner to equalize the output voltage **OUT** thereof with the reference voltage **REF**.

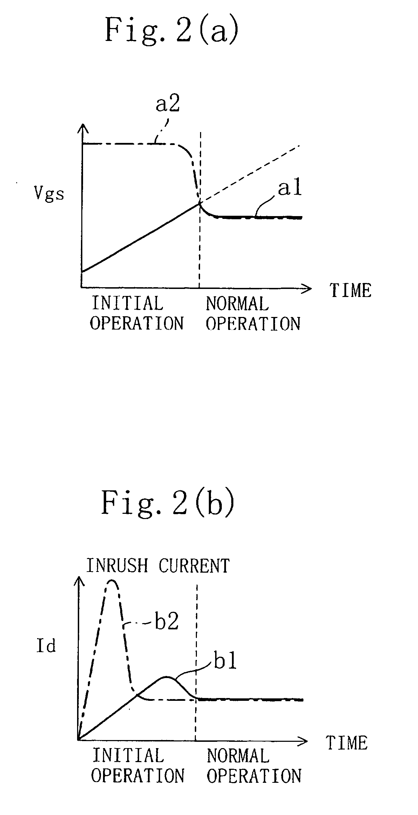

Figures **2(a)** and **2(b)** illustrate the operational concept of the power circuit shown in Figure **1**. Specifically, Figure **2(a)** is a graph illustrating respective variations in the gate-source voltage **Vgs** of the output transistor **1** with time. In Figure **2(a)**, the solid line **a1** represents the Vgs variation of a power circuit with the inrush current limiter **10**, while the one dot chain **a2** represents the Vgs variation of a power circuit without the inrush current limiter **10**. Figure **2(b)** is a graph illustrating respective variations in current **Id** supplied by the output transistor **1** with time. In Figure **2(b)**, the solid line **b1** represents the Id variation of a power circuit with the inrush current limiter **10**, while the one dot chain **b2** represents the Id variation of a power circuit without the inrush current limiter **10**.

As represented by the one dot chains **a2** and **b2** in Figures **2(a)** and **2(b)**, if the inrush current limiter **10** is not provided, the gate-source voltage **Vgs** is high during the initial operation, and therefore, an excessively large current, i.e., so-called inrush current, flows unintentionally. In contrast, if the inrush current limiter **10** is provided, the gate-source voltage **Vgs** gradually increases from a very small value during the initial operation. After the circuit has started to operate normally, the output transistor **1** is controlled similarly to that of a circuit not including the inrush current limiter **10**. By performing control in such a manner, the generation of inrush current can be suppressed during the initial operation as represented by the solid lines **a1** and **b1**. It is noted that the initial operation mode is changed into the normal operation mode at a point in time a predetermined interval has passed since the start of operation or when the voltage **Vgs** controlled by the inrush current limiter **10** exceeds the voltage **Vgs** for the normal operation.

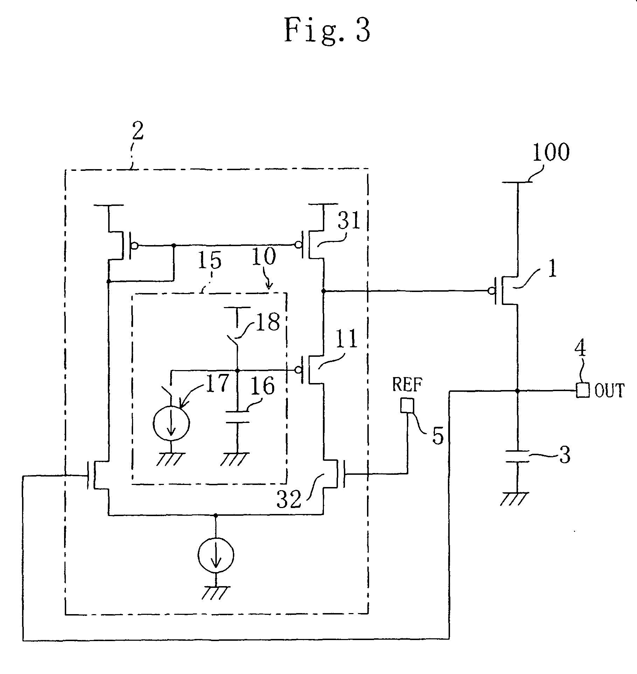

Figure **3** illustrates an exemplary detailed realization of the power circuit shown in Figure **1**. As shown in Figure **3**, a limiting transistor **11** is provided between a pair of transistors **31** and **32**, which together constitute a current path at the output stage of the differential amplifier **2**. Also, an operation controller **15** is provided for controlling the gate potential of the limiting transistor **11**. The inrush current limiter **10** is made up of the limiting transistor **11** and the operation controller **15**.

In a circuit not including the limiting transistor **11**, the reference voltage **REF** is higher than the output voltage **OUT** during the initial operation. Accordingly, the transistor **31** supplies no charges to the gate of the output transistor **1** and the transistor **32** extract charges from the gate of the output transistor **1**. As a result, the gate potential of the output transistor **1** drops to generate the inrush current.

To limit the inrush current, the limiting transistor **11** is provided according to this embodiment, thereby suppressing the operation of the transistor **32** extracting charges from the gate of the output transistor **1**. Since the limiting transistor **11** actually operates as a source follower circuit, the gate potential of the output transistor **1** is equal to the sum of the gate potential of the limiting transistor **11** and the threshold voltage of the transistor **1**. Accordingly, if the gate potential of the limiting transistor **11** is controlled, then the gate-source voltage **Vgs** of the output transistor **1** can be controlled.

Thus, the operation controller **15** sets the gate potential of the limiting transistor **11** relatively high during the initial operation of the power circuit, and then gradually lowers the potential with the passage of time. Accordingly, the gate-source voltage **Vgs** of the output transistor **1** gradually increases from a very small value, and therefore, the generation of the inrush current can be suppressed. On and after a predetermined time has passed, the gate potential of the limiting transistor **11** is sufficiently low. In addition, since the output voltage **OUT** is equalized with the reference voltage **REF**, the transistor **31** starts to supply charges to the gate of the output transistor **1**. In such a situation, the limiting transistor **11** has no longer any effect on the operation of the differential amplifier **2** and the power circuit automatically starts to operate normally.

The operation controller **15** includes a capacitor **16**, a switching current source **17** and a charging switch **18**. One terminal of the capacitor **16** is connected to the gate of the limiting transistor **11**, while the other terminal thereof is grounded. The potential at the former terminal is used to control the gate potential of the limiting transistor **11**. The switching current source **17** has its positive terminal connected to the non-grounded terminal of the capacitor **16** and its negative terminal grounded. While the switch is ON, the current source is operating to gradually extract charges stored in the capacitor **16**. The charging switch **18**, which is exemplary capacitor initializing means as defined in the appended claims, is provided between the non-grounded terminal of the capacitor **16** and the power supply. In its ON state, the switch **18** charges the capacitor **16** to the supply voltage.

Before the power circuit starts to operate, the operation controller **15** turns the charging switch **18** ON without turning the switching current source **17** ON, thereby precharging the capacitor **16**. As a result, the capacitor **16** is charged to the supply voltage and the gate potential of the limiting transistor **11** is set at the supply voltage. When the power circuit starts to operate, the operation controller **15** turns the charging switch **18** OFF and the switching current source **17** ON. As a result, the capacitor **16** is gradually discharged, i.e., its voltage gradually decreases, during the initial operation. Accordingly, the gate potential of the limiting transistor **11** also decreases gradually.

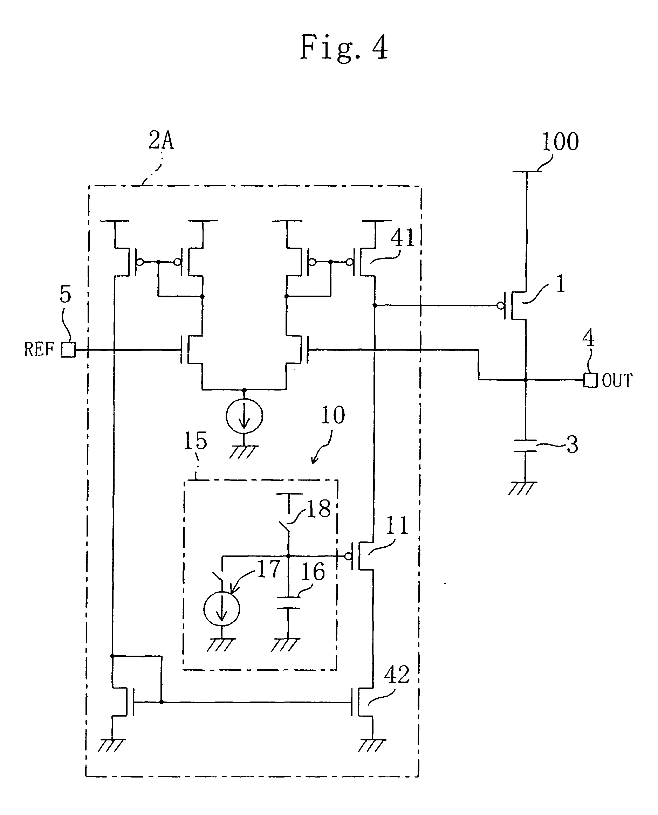

Figure **4** illustrates another exemplary detailed realization of the power circuit shown in Figure **1**. In Figure **4**, the differential amplifier **2A** is implemented as an operational transconductance amplifier (OTA). As shown in Figure **4**, the limiting transistor **11** is provided between a pair of transistors **41** and **42**, which together constitute a current path at the output stage of the differential amplifier **2A** of the OTA type. The operation controller **15** has the same configuration as the counterpart illustrated in Figure **3**. The inrush current limiter **10** shown in Figure **4** also operates in the same way as the counterpart shown in Figure **3**, and the description thereof will be omitted herein.

In the power circuit according to the present invention, no transistors but the output transistor **1** need to be provided between the power supply terminal **100** and the output terminal **4** unlike a conventional circuit. That is to say, since no large-sized transistor should be connected in series to the output transistor **1**, the generation of inrush current can be suppressed substantially without increasing the layout area of the power circuit. Also, even when a large current should be supplied as the output current, an output voltage approximating the supply voltage can be supplied.

In the foregoing description, a power circuit including a single-stage differential amplifier or a differential amplifier of the OTA type has been exemplified. It should be noted, however, the present invention is in no way limited to these specific embodiments. Thus, any other differential amplifier, such as a two-stage differential amplifier, may also be used instead. In such a case, the inrush current limiter can also be formed easily by providing the limiting transistor on the current path at the output stage of the differential amplifier. Although an n-channel differential amplifier is used in the foregoing embodiment, a p-channel differential amplifier may be naturally used.

Hereinafter, various alternative examples of the inrush current limiter according to the first embodiment will be exemplified.

### Alternative Example 1

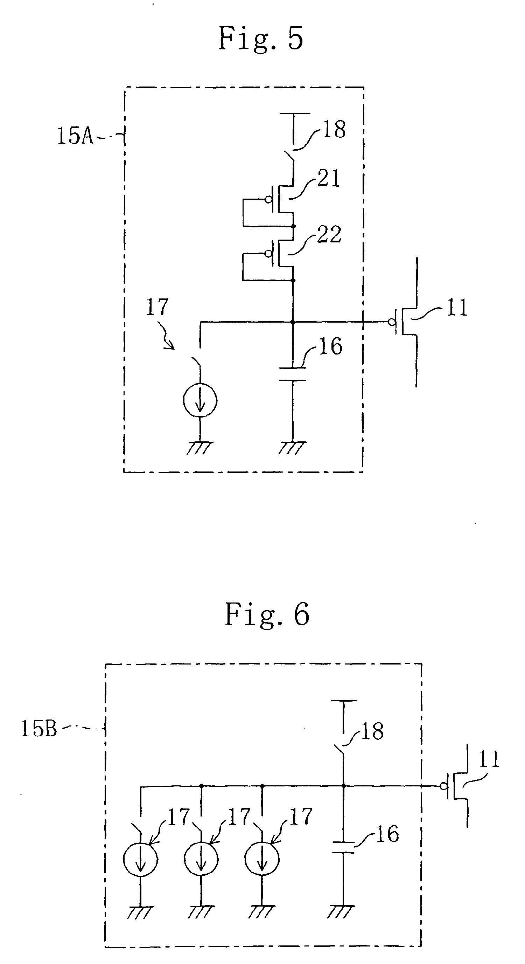

Figure **5** illustrates a first alternative configuration of the inrush current limiter according to the first embodiment. In the operation controller **15A** shown in Figure **5**, the charging switch **18** and diode-connected transistors **21** and **22** are connected in series between one terminal of the capacitor **16** and the power supply. Exemplary capacitor initializing means as defined in the appended claims is made up of the switch **18** and transistors **21** and **22**. By additionally providing these diode-connected transistors **21** and **22**, the capacitor **16** can be charged to a voltage represented as (supply voltage - threshold voltage of transistor × 2) before the power circuit starts to operate.

The output transistor **1** starts to supply current when the gate potential thereof reaches (supply voltage - threshold voltage of transistor), i.e., when the gate potential of the limiting transistor 11 reaches (supply voltage - threshold voltage of transistor×2). Thus, a power circuit with the inrush current limiter shown in Figure **5** can start to operate normally earlier than that shown in Figure **3** or **4** by the time taken for the gate potential of the output transistor **1** to reach (supply voltage-threshold voltage of transistor).

Even if only a single diode-connected transistor is provided, the same effects can be attained. That is to say, the power circuit can start to operate normally than the counterpart shown in Figure **3** or **4**.

### Alternative Example 2

Figure **6** illustrates a second alternative configuration of the inrush current limiter according to the first embodiment. The operation controller **15B** shown in Figure **6** includes a plurality of switching current sources **17**, which are selectively turned ON. When only one switching current source **17** is provided as in Figure **3** or **4**, the discharging rate of the capacitor **16** is defined by the ability of the single current source **17**. Thus, the rise time of the power circuit is also fixed. In contrast, according to the configuration shown in Figure **6**, the discharging rate of the capacitor **16** can be variable by selectively turning ON an arbitrary number of current sources **17**. For example, if there is no concern about the generation of inrush current, then the rise time of the power circuit can be shortened by increasing the discharging rate of the capacitor **16**.

Also, when no charges are stored in the smoothing capacitor **3**, the inrush current is more likely to generate, for instance. Thus, in such a situation, the inrush current can be limited by turning ON a current source with relatively low ability (or just one of the current sources of equal ability). On the other hand, if a certain quantity of charges have already been stored in the smoothing capacitor **3**, then the inrush current is less likely to generate. Accordingly, the power circuit can be activated more rapidly by turning ON a current source with relatively high ability (or several current sources of an equal ability at the same time).

In this case, the discharging rate of the capacitor **16** may be changed either by selectively turning ON appropriate one of the current sources **17** of mutually different abilities or a required number of current sources **17** of equal ability.

### Alternative Example 3

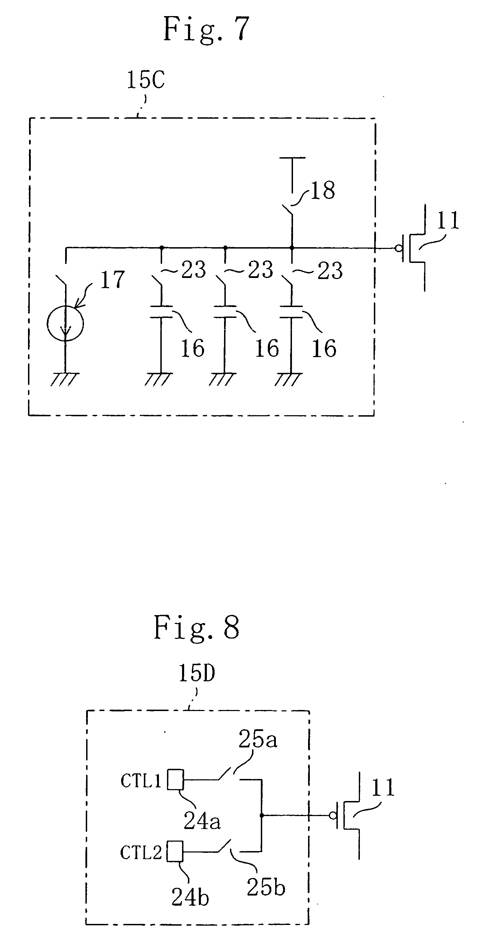

Figure **7** illustrates a third alternative configuration of the inrush current limiter according to the first embodiment. The operation controller **15B** shown in Figure **6** includes a plurality of switching current sources **17**, while the operation controller **15C** includes a plurality of capacitors **16** instead. Also, switches **23** are further provided between the gate of the limiting transistor **11** and the respective capacitors **16** such that the capacitors **16** are selectively charged or discharged. According to the configuration shown in Figure **7**, the total capacitance of the capacitors **16** can be changed by selectively charging or discharging an arbitrary number of capacitors **16** using the switches **23**.

If the total capacitance of the capacitors **16** is relatively large, then it takes a longer time for the current source **17** to discharge the capacitors **16**, thus limiting the inrush current. Conversely, if the total capacitance of the capacitors **16** is relatively small, then the capacitors **16** are discharged more quickly. As a result, the power circuit can also be activated in a shorter time. In other words, the gate potential of the limiting transistor **11** decreases at a rate variable with the total capacitance of the capacitors **16**. Accordingly, the inrush current limiter **15C** can perform the same function as the inrush current limiter **15B** shown in Figure **6**.

In this case, the total capacitance of the capacitors **16** may be changed either by selectively charging or discharging appropriate one of the capacitors **16** with mutually different capacitances or a required number of capacitors **16** of equal capacitance.

### Alternative Example 4

Figure **8** illustrates a fourth alternative configuration of the inrush current limiter according to the first embodiment. The operation controller **15D** shown in Figure **8** includes a pair of terminals **24a** and **24b**, to which first and second control potentials **CTL1** and **CTL2** are respectively applied. The controller 15D further includes a pair of switches **25a** and **25b** for selectively applying the first and second control potentials **CTL1** and **CTL2**, respectively, to the gate of the limiting transistor **11**.

The first control potential **CTL1** is preset at such a value as suppressing the generation of inrush current through the operation of the limiting transistor **11** when the potential **CTL1** is applied to the gate of the limiting transistor **11**. On the other hand, the second control potential **CTL2** is preset at such a value that even when the potential **CTL2** is applied to the gate of the limiting transistor **11**, the normal operation of the differential amplifier is not affected by the limiting transistor **11**.

During the initial operation of the power circuit, the switch **25a** is turned ON and the first control potential **CTL1** is applied to the gate of the limiting transistor **11**. When the power circuit starts to operate normally after a predetermined time has passed, the switch **25b** is turned ON and the second control potential **CTL2** is applied to the gate of the limiting transistor **11**. By performing these operations, the generation of inrush current can be suppressed.

A plurality of first control potentials **CTL1** may be prepared and selectively applied depending on the operation intended.

### Alternative Example 5

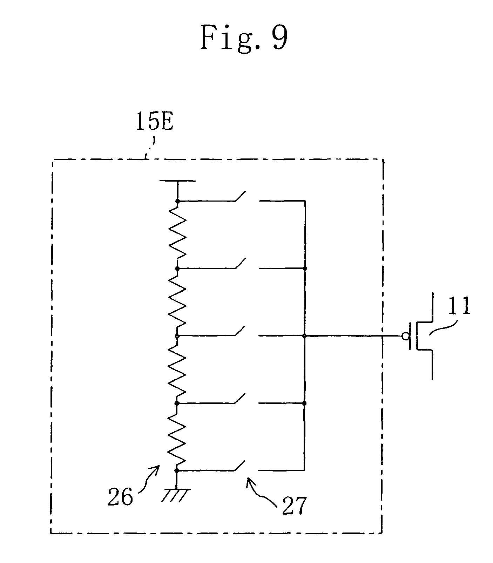

Figure **9** illustrates a fifth alternative configuration of the inrush current limiter according to the first embodiment. The operation controller **15E** shown in Figure **9** sets respective potentials, corresponding to the first and second control potentials **CTL1** and **CTL2** shown in Figure **8**, by dividing the supply voltage using resistors. Specifically, a bank **26** of resistors connected in series is provided between the power supply and the ground, thereby dividing the potential difference therebetween into a plurality of potentials, one of which is selected by a potential selector **27** made up of a plurality of switches. And the potential selected is applied to the gate of the limiting transistor **11**.

During the initial operation of the power circuit, the potential selector **27** sequentially applies the potentials to the gate of the limiting transistor **11** in the ascending order, i.e., beginning with the highest one. As a result, the generation of inrush current can be suppressed. On the other hand, during the normal operation, the potential selector **27** applies the ground potential to the gate of the limiting transistor **11,** thereby turning the limiting transistor **11** ON. Accordingly, the differential amplifier operates normally.

### Alternative Example 6

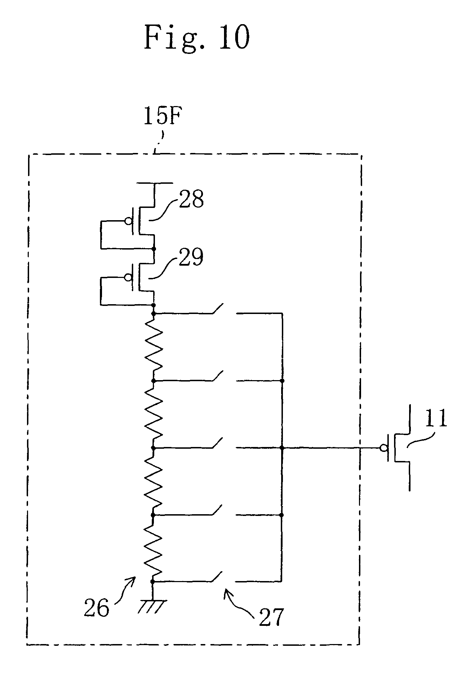

Figure **10** illustrates a sixth alternative configuration of the inrush current limiter according to the first embodiment. The operation controller **15F** further includes a pair of diode-connected transistors **28** and **29** between the power supply and the resistor bank **26** of the operation controller **15E** shown in Figure **9**.

As described in the first alternative example, the output transistor **1** starts to supply current when the gate potential of the limiting transistor **11** reaches (supply voltage-threshold voltage of transistor × 2). Thus, in the operation controller **15F** shown in Figure **10**, the potential at the upper end of the resistor bank **26** is set at (supply voltage-threshold voltage of transistor × 2) by providing the pair of diode-connected transistors **28** and **29**. In such a configuration, the resistance of the resistor bank **26** can be reduced compared to the example illustrated in Figure **9**.

The same effects are attainable with only one diode-connected transistor provided.

### (Modified example of power circuit shown in Figure 3)

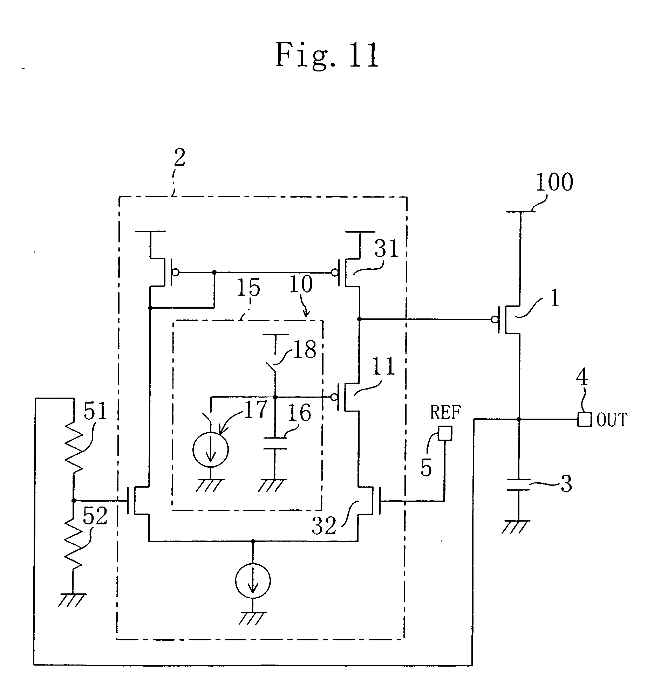

Figure **11** illustrates a modified example of the power circuit shown in Figure **3**. In Figure **11**, the output voltage **OUT** is divided using resistors **51** and **52** and then the divided voltage is fed back to the differential amplifier **2**. In this manner, the output voltage **OUT** can be set higher than the reference voltage **REF**.

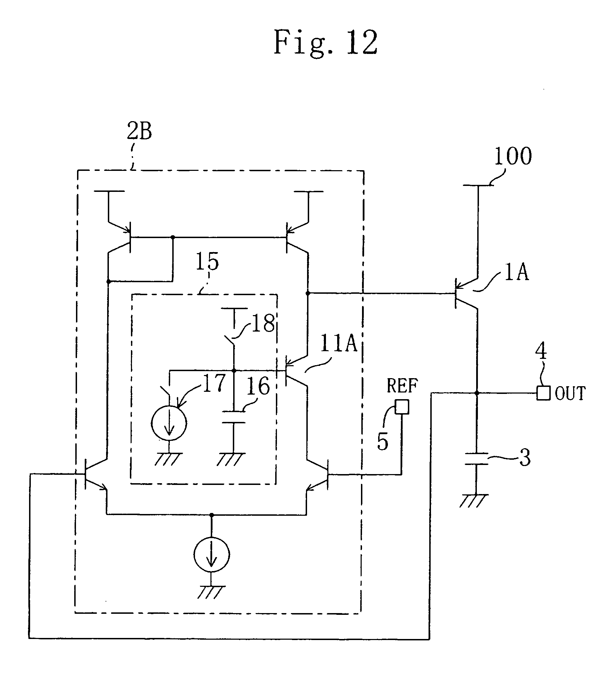

The power circuit shown in Figure **3** includes MOS transistors. The present invention, however, is in no way limited to such an embodiment. For example, the present invention is easily applicable to an alternative power circuit shown in Figure **12**, in which an output transistor **1A** and respective transistors of a differential amplifier **2B** are implemented as bipolar transistors.

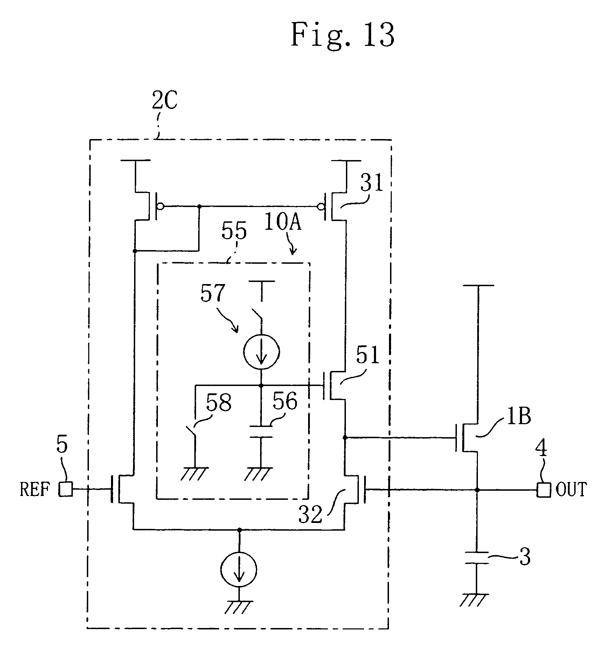

Also, in the power circuit shown in Figure **3**, a p-channel transistor is used as the output transistor **1**. Alternatively, an n-channel transistor may also be used as the output transistor **1B** as shown in Figure **13**. In such a case, an inrush current limiter **10A** gradually increases the gate potential of the output transistor **1B** from the ground potential during the initial operation of the power circuit.

Unlike the inrush current limiter **10** shown in Figure **3**, the inrush current limiter **10A** shown in Figure **13** includes an n-channel limiting transistor **51** and an operation controller **55**. The n-channel limiting transistor **51** is provided between a pair of transistors **31** and **32**, which together constitute a current path at the output stage of a differential amplifier **2C**. The operation controller **55** controls the gate potential of the limiting transistor **51**.

The operation controller **55** includes a capacitor **56**, a switching current source **57** and a discharging switch **58**. One terminal of the capacitor **56** is connected to the gate of the limiting transistor **51**, while the other terminal thereof is grounded. The potential at the former terminal is used to control the gate potential of the limiting transistor **51**. The switching current source **57** has its positive terminal connected to the power supply terminal and its negative terminal connected to the non-grounded terminal of the capacitor **56**. While the switch is ON, the current source **57** is operating to gradually supply charges to the capacitor **56**. The discharging switch **58**, which is exemplary capacitor initializing means as defined in the appended claims, is provided between the non-grounded terminal of the capacitor **56** and the ground terminal. In its ON state, the switch **58** discharges the capacitor **56**.

Before the power circuit starts to operate, the operation controller **55** turns the discharging switch **58** ON without turning the switching current source **57** ON, thereby pre-discharging the capacitor **56**. As a result, the capacitor **56** is discharged to zero volts and the gate potential of the limiting transistor **51** is set at the ground potential. When the power circuit starts to operate, the operation controller **55** turns the discharging switch **58** OFF and the switching current source **57** ON. As a result, the capacitor **56** is gradually charged, i.e., its voltage gradually increases, during the initial operation. Accordingly, the gate potential of the limiting transistor **51** also increases gradually. Since the limiting transistor **51** operates as a source follower circuit, the gate potential of the output transistor **1B** gradually increases and the generation of inrush current can be suppressed.

### EMBODIMENT 2

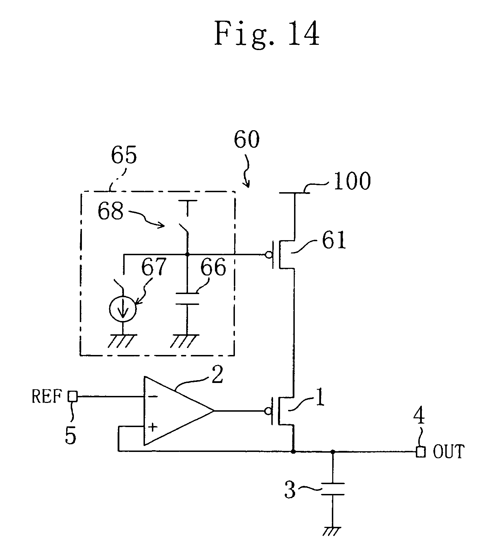

Figure **14** illustrates an exemplary circuit configuration of a power circuit with an inrush current limiter according to a second embodiment of the present invention. In Figure **14**, a limiting transistor **61** is connected in series to the output transistor **1**, and an operation controller **65** similar to that of the first embodiment is connected to the gate of the limiting transistor **61**. That is to say, the operation controller **65** also includes a capacitor **66**, a switching current source **67** and a charging switch **68**. An inrush current limiter **60** is made up of the limiting transistor **61** and the operation controller **65**.

During the initial operation of the power circuit, the operation controller **65** applies a potential at one terminal of the capacitor **66**, which gradually decreases from the supply voltage, to the gate of the limiting transistor **61**, thereby suppressing the generation of the inrush current. On the other hand, the gate potential of the limiting transistor **61** is equal to the ground potential during the normal operation of the power circuit. Accordingly, the limiting transistor **61** is ON and hardly affects the operation of the power circuit. In this embodiment, however, a current corresponding to the output current flows through the limiting transistor **61** during the normal operation of the power circuit, and therefore, the limiting transistor **61** should be of a relatively large size. Thus, compared to the power circuit of the first embodiment, the layout area should be rather increased.

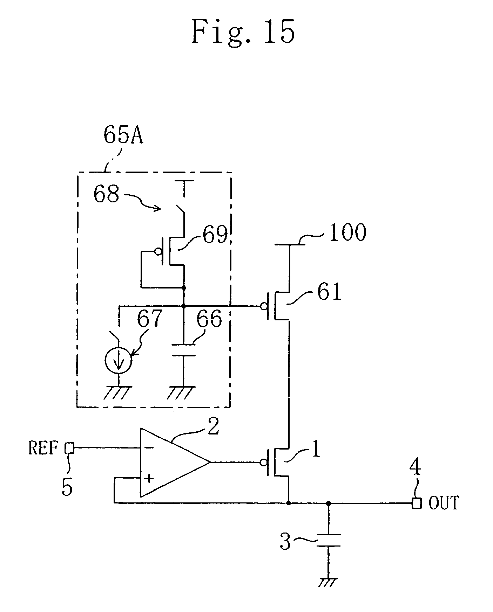

Figure **15** illustrates a modified example of the power circuit shown in Figure **14**. Like the operation controller **15A** shown in Figure **5** according to the first embodiment, the operation controller **65A** includes a charging switch **68** and a diode-connected transistor **69**, which are connected in series between the power supply terminal and the capacitor **66**. The limiting transistor **61** starts to supply current when the gate potential thereof reaches (supply voltage-threshold voltage of transistor). Accordingly, the rise time of the power circuit can be shortened by setting the charged potential of the capacitor **66** at (supply voltage - threshold voltage of transistor) using the diode-connected transistor **69**.

Any other alternative example of the inrush current limiter as described in the first embodiment is also applicable to the power circuit according to the second embodiment.

It is noted that a controller for inhibiting the inrush current limiter may be additionally provided for the power circuit according to the first or second embodiment.

The inrush current generates when substantially no charges are stored in the smoothing capacitor **3** and the output voltage is much lower than the preset reference voltage before the power circuit starts to operate. However, if the smoothing capacitor **3** has been charged to a potential approximating the reference voltage before the power circuit starts to operate, then no inrush current generates.

Accordingly, if the smoothing capacitor **3** has already been charged before the power circuit starts to operate, the inrush current limiter according to the present invention need not be operated. Should the inrush current limiter be activated in such a situation, the rise time of the power circuit gets longer to the contrary. Thus, in a power circuit including such a controller for inhibiting the inrush current limiter, the generation of inrush current can be suppressed when required. And if there is no need to limit the inrush current, the inrush current limiter may be inhibited and the power circuit can be activated rapidly enough.

For example, such a controller for inhibiting the inrush current limiter should be provided for a system intended to intermittently operate a power circuit such that the power dissipation can be reduced when the output current is small. In such a case, the power circuit is alternately and repeatedly turned ON/OFF with the smoothing capacitor always charged. Accordingly, the inrush current limiter should be enabled only when the power circuit is turned ON for the first time. That is to say, such a power circuit should preferably be activated in a short time and the inrush current limiter should be inhibited in the other situations. Accordingly, such a system preferably includes the controller for inhibiting the inrush current limiter.

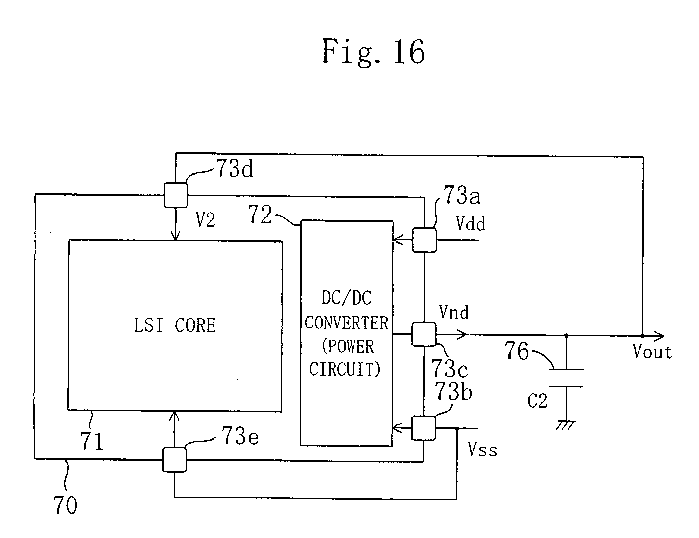

Figure **16** illustrates an LSI system including the power circuit according to the present invention. As shown in Figure **16**, an integrated circuit **70** includes: an LSI core **71**; a DC-DC converter **72** as the power circuit; and a capacitor **76** as an external component. The integrated circuit **70** further includes pads **73a** through **73e**. The DC-DC converter **72** includes the inrush current limiter of the present invention, converts supply voltages **Vdd** and **Vss**, which have been applied to the pads **73a** and **73b**, into a voltage **Vnd** through the above-described operations and outputs the voltage **Vnd** to the pad **73c**. The output voltage **Vnd** of the DC-DC converter **72** is output as a voltage **Vout**. The output voltage **Vout** is supplied as an internal supply voltage to the LSI core **71**.

As is apparent from the foregoing description, the current supplied by the output transistor can be gradually increased by the inrush current limiter according to the present invention during the initial operation of the power circuit. Thus, the generation of inrush current can be suppressed during the initial operation of the power circuit by adopting a configuration different from the conventional one. Also, the limiting transistor included in the inrush current limiter may be an MOS transistor, for example. Accordingly, no bipolar process is needed and the inrush-current-limiting power circuit can be fabricated only by a CMOS process. Moreover, if the limiting transistor is provided on the current path at the output stage of the differential amplifier, the generation of inrush current can be suppressed substantially without increasing the layout area of the power circuit. Furthermore, even when a large current should be supplied as the output current, an output voltage approximating the supply voltage can be provided.

## Claims

1. A power circuit for converting a supply voltage(100) and outputting the converted voltage (OUT), comprising:
an output transistor (1) for supplying a current from a power supply (100) to an output terminal(4), and
a differential amplifier(2) for controlling the current supplied by the output transistor (1) in such a manner as to regulate a voltage at the output terminal (4) based on a preset reference voltage(REF),
**characterized by**
a means (10; 60) for limiting an inrush current, comprising
a limiting transistor (11; 61) for limiting the current through the output transistor (1), and
an operation controller (15; 65) for controlling a gate potential of the limiting transistor (11; 61) so as as to gradually increase the current supplied by the output transistor (1) during an initial operation of the power circuit.

2. The circuit of claim 1, wherein the limiting transistor (11) is controlling a gate potential of the output transistor (1), and the limiting transistor (11) is provided on a current path at an output stage of the differential amplifier(2).

3. The circuit of claim 1, wherein the limiting transistor (61) is provided between the power supply (100) and the output terminal (4) and is connected in series to the output transistor (1).

4. The circuit of any of claims 1-3, wherein during the initial operation of the power circuit, the operation controller (15; 65) controls the gate potential of the limiting transistor (11; 61) at such a value as preventing the output transistor (1) from supplying an excessively large current, and
wherein during a normal operation of the power circuit, the operation controller (15; 65) controls the gate potential of the limiting transistor (11; 61) at such a value as turning the limiting transistor (11; 61) ON.

5. The circuit of claim any of claims 1-4, wherein the operation controller (15; 65) comprises:
a capacitor (16; 56; 66), a potential at one terminal of the capacitor (16; 56; 66) being used to control the gate potential of the limiting transistor (11; 61);
capacitor initializing means for setting a voltage of the capacitor (16; 56; 66) at a predetermined voltage before the power circuit starts to operate; and
a current source (17, 67), which is selectively turned ON to gradually charge or discharge the capacitor (16; 56; 66).

6. The circuit of claim 5, wherein the capacitor initializing means comprises:
a switch (18; 68), which is selectively turned ON; and a transistor (69), which is connected to form a diode,
the switch (18; 68) and the diode-connected transistor (69) both being connected in series between the terminal of the capacitor (16; 56; 66) and a power supply terminal (100) or a ground terminal.

7. The circuit of claim 5 or 6, wherein the operation controller(15; 65) comprises a plurality of the current sources (17), which are selectively turned ON.

8. The circuit of any of claims 5-7, wherein the operation controller (15; 65) comprises a plurality of the capacitors (16), which are selectively charged or discharged.

9. The circuit of any of claims 1-4, wherein the operation controller(15; 65) is supplied with first and second control potentials(CTL1, CTL2), which are selected by the operation controller (15; 65) during the initial operation and the normal operation of the power circuit, respectively, and
wherein the operation controller (15; 65) controls the gate potential of the limiting transistor (11; 61) in accordance with the control voltage selected.

10. The circuit of any of claims 1-4, wherein the operation controller(15; 65) comprises:
a bank of resistors (26) that are connected in series to each other, the bank dividing a potential between both terminals thereof into a plurality of potentials; and
means (27) for selecting one of the potentials produced by the bank, and
wherein the operation controller(15; 65) controls the gate potential of the limiting transistor (11; 61) in accordance with the potential selected by the selecting means (27).

11. An integrated circuit (70) comprising a power circuit (72) according to any of claims 1-10 and operating at a voltage that has been converted and output by the power circuit (72).

12. The circuit of any of claims 1-11, wherein the limiting transistor (11; 61) is a MOS transistor.

## Patentansprüche

1. Leistungsschaltung zur Konvertierung einer Versorgungsspannung (100) und zur Ausgabe der konvertierten Spannung (OUT) mit:
einem Ausgangstransistor (1) zur Lieferung eines Stroms von einer Spannungsversorgung (100) an einen Ausgangsanschluss (4), und
einen Differenzverstärker (2) zur Steuerung des von dem Ausgangstransistor (1) gelieferten Stroms derart, dass eine Spannung an dem Ausgangsanschluss (4) auf Basis einer voreingestellten Referenzspannung (REF) reguliert wird,
**gekennzeichnet durch**
eine Einrichtung (10; 60) zur Begrenzung eines Einschaltstromstoßes, umfassend
einen Begrenzungstransistor (11, 61) zur Begrenzung des Stroms **durch** den Ausgangstransistor (1), und
eine Betriebssteuerung (15; 65) zur Steuerung einer Gate-Spannung des Begrenzungstransistors (11, 61), um den von dem Ausgangstransistor (1) gelieferten Strom während eines anfänglichen Betriebs der Leistungsschaltung allmählich zu erhöhen.

2. Die Schaltung aus Anspruch 1, wobei der Begrenzungstransistor (11) eine Gate-Spannung des Ausgangstransistors (1) steuert, und der Begrenzungstransistor (11) auf einem Strompfad in einer Ausgangsstufe des Differenzverstärkers (2) vorgesehen ist.

3. Die Schaltung aus Anspruch 1, wobei der Begrenzungstransistor (61) zwischen der Spannungsversorgung (100) und dem Ausgangsanschluss (4) vorgesehen ist und in Serie mit dem Ausgangstransistor (1) geschaltet ist.

4. Die Schaltung aus einem der Ansprüche 1 bis 3, wobei während des anfänglichen Betriebs der Leistungsschaltung die Betriebssteuerung (15, 65) die Gate-Spannung des Begrenzungstransistors (11, 61) bei einem derartigen Wert steuert, dass verhindert wird, dass der Ausgangstransistor (1) einen übermäßig großen Strom liefert, und
wobei während eines normalen Betriebs der Leistungsschaltung die Betriebssteuerung (15; 65) die Gate-Spannung des Begrenzungstransistors (11; 61) an einem derartigen Wert regelt, dass der Begrenzungstransistor (11; 61) eingeschaltet ist.

5. Die Schaltung aus einem der Ansprüche 1 bis 4, wobei die Betriebssteuerung (15, 65) umfasst:
einen Kondensator (16; 56; 66), wobei eine Spannung an einem Anschluss des Kondensators (16; 56; 66) verwendet wird, um die Gatespannung des Begrenzungstransistors (11; 61) zu steuern;
eine Kondensatorinitialisierungseinrichtung zur Einstellung einer Spannung des Kondensators (16; 56; 66) auf eine vorbestimmte Spannung, bevor die Leistungsschaltung zu arbeiten beginnt; und
eine Stromquelle (17, 67), die wahlweise eingeschaltet wird, um den Kondensator (16; 56; 66) allmählich zu laden oder zu entladen.

6. Die Schaltung aus Anspruch 5, wobei die Kondensatorinitialisierungseinrichtung umfasst:
einen Schalter (18; 68), der wahlweise eingeschaltet ist; und einen Transistor (69), der angeschlossen ist, um eine Diode zu bilden,
wobei der Schalter (18; 68) und der zu einer Diode geschaltete Transistor (69) beide zwischen einem Anschluss des Kondensators (16; 56; 66) und einem Spannungsversorgungsanschluss (100) oder einem Masseanschluss in Serie geschaltet sind.

7. Die Schaltung aus Anspruch 5 oder 6, wobei die Betriebssteuerung (15; 65) eine Mehrzahl von Stromquellen (17) umfasst, die wahlweise eingeschaltet werden.

8. Die Schaltung aus einem der Ansprüche 5 bis 7, wobei die Betriebssteuerung (15; 65) eine Mehrzahl der Kondensatoren (16) enthält, die wahlweise geladen oder entladen werden.

9. Die Schaltung aus einem der Ansprüche 1 bis 4, wobei die Betriebssteuerung (15; 65) mit einer ersten und einer zweiten Steuerspannung (CTL1, CTL2) versorgt ist, die durch die Betriebssteuerung (15; 65) während des anfänglichen Betriebs bzw. des normalen Betriebs der Leistungsschaltung ausgewählt werden, und
wobei die Betriebssteuerung (15; 65) die Gate-Spannung des Begrenzungstransistors (11; 61) in Übereinstimmung mit der gewählten Steuerspannung steuert.

10. Die Schaltung aus einem der Ansprüche 1 bis 4, wobei die Betriebssteuerung (15; 65) umfasst:
eine Reihe von Widerständen (26), die in Serie zueinander geschaltet sind, wobei die Reihe eine Spannung zwischen ihren beiden Anschlüssen in eine Mehrzahl von Spannungen teilt; und
eine Einrichtung (27) zur Auswahl einer der von der Reihe erzeugten Spannungen, und
wobei die Betriebssteuerung (15; 65) die Gate-Spannung des Begrenzungstransistors (11; 61) in Übereinstimmung mit der von der Auswahleinrichtung (27) ausgewählten Spannung steuert.

11. Integrierte Schaltung (70) mit einer Leistungsschaltung (72) gemäß einem der Ansprüche 1 bis 10, die bei einer Spannung arbeitet, die von der Leistungsschaltung (72) konvertiert und ausgegeben wurde.

12. Die Schaltung nach einem der Ansprüche 1 bis 11, wobei der Begrenzungstransistor (11; 61) ein MOS-Transistor ist.

## Revendications

1. Circuit de puissance destiné à convertir une tension d'alimentation (100) et à fournir en sortie la tension convertie (OUT), comprenant :
un transistor de sortie (1) destiné à appliquer un courant provenant d'une alimentation (100) à une borne de sortie (4), et
un amplificateur différentiel (2) destiné à commander le courant fourni par le transistor de sortie (1) de manière à réguler une tension au niveau de la borne de sortie (4) sur la base d'une tension de référence préétablie (REF),
**caractérisé par**
un moyen (10 ; 60) destiné à limiter un courant d'appel, comprenant
un transistor de limitation (11 ; 61) destiné à limiter le courant au travers du transistor de sortie (1), et
un contrôleur de fonctionnement (15 ; 65) destiné à commander un potentiel de grille du transistor de limitation (11 ; 61) de façon à augmenter progressivement le courant fourni par le transistor de sortie (1) durant le fonctionnement initial du circuit de puissance.

2. Circuit selon la revendication 1, dans lequel le transistor de limitation (11) commande un potentiel de grille du transistor de sortie (1), et le transistor de limitation (11) est disposé sur une ligne de courant au niveau d'un étage de sortie de l'amplificateur différentiel (2).

3. Circuit selon la revendication 1, dans lequel le transistor de limitation (61) est prévu entre l'alimentation (100) et la borne de sortie (4) et est relié en série au transistor de sortie (1).

4. Circuit selon l'une quelconque des revendications 1 à 3, dans lequel durant le fonctionnement initial du circuit de puissance, le contrôleur de fonctionnement (15 ; 65) commande le potentiel de grille du transistor de limitation (11 ; 61) à une telle valeur de façon à empêcher le transistor de sortie (1) de fournir un courant excessivement important, et
où durant un fonctionnement normal du circuit de puissance, le contrôleur de fonctionnement (15 ; 65) commande le potentiel de grille du transistor de limitation (11 ; 61) à une valeur de façon à activer le transistor de limitation (11 ; 61).

5. Circuit selon l'une quelconque des revendications 1 à 4, dans lequel le contrôleur de fonctionnement (15 ; 65) comprend :
un condensateur (16; 56 ; 66), un potentiel au niveau d'une borne du condensateur (16 ; 56 ; 66) étant utilisé pour commander le potentiel de grille du transistor de limitation (11 ; 61),
un moyen d'initialisation de condensateur destiné à établir une tension du condensateur (16 ; 56 ; 66) à une tension prédéterminée avant que le circuit de puissance ne commence à fonctionner, et
une source de courant (17, 67), qui est sélectivement activée pour charger ou décharger progressivement le condensateur (16 ; 56 ; 66).

6. Circuit selon la revendication 5, dans lequel le moyen d'initialisation de condensateur comprend :
un commutateur (18 ; 68), qui est sélectivement fermé, et un transistor (69) qui est connecté pour former une diode,
le commutateur (18 ; 68) et le transistor monté en diode (69) étant connectés tous les deux en série entre la borne du condensateur (16 ; 56 ; 66) et une borne d'alimentation (100) ou une borne de masse.

7. Circuit selon la revendication 5 ou 6, dans lequel le contrôleur de fonctionnement (15 ; 65) comprend une pluralité de sources de courant (17), qui sont sélectivement activées.

8. Circuit selon l'une quelconque des revendications 5 à 7, dans lequel le contrôleur de fonctionnement (15 ; 65) comprend une pluralité de condensateurs (16), qui sont sélectivement chargés ou déchargés.

9. Circuit selon l'une quelconque des revendications 1 à 4, dans lequel le contrôleur de fonctionnement (15 ; 65) reçoit des premier et second potentiels de commande (CTL1, CTL2), qui sont sélectionnés par le contrôleur de fonctionnement (15 ; 65) durant le fonctionnement initial et le fonctionnement normal du circuit de puissance, respectivement, et
où le contrôleur de fonctionnement (15 ; 65) commande le potentiel de grille du transistor de limitation (11 ; 61) conformément à la tension de commande sélectionnée.

10. Circuit selon l'une quelconque des revendications 1 à 4, dans lequel le contrôleur de fonctionnement (15 ; 65) comprend:
une batterie de résistances (26) qui sont connectées en série les unes aux autres, la batterie divisant un potentiel entre ses deux bornes en une pluralité de potentiels, et
un moyen (27) destiné à sélectionner l'un des potentiels produits par la batterie, et
où le contrôleur de fonctionnement (15 ; 65) commande le potentiel de grille du transistor de limitation (11 ; 61) conformément au potentiel sélectionné par le moyen de sélection (27).

11. Circuit intégré (70) comprenant un circuit de puissance (72) selon l'une quelconque des revendications 1 à 10 et fonctionnant à une tension qui a été convertie et fournie en sortie par le circuit de puissance (72).

12. Circuit selon l'une quelconque des revendications 1 à 11, dans lequel le transistor de limitation (11 ; 61) est un transistor de type MOS.
